# EUROPÄISCHE PATENTSCHRIFT

(11) **EP 0 881 072 B1**
(45) Veröffentlichungstag und Bekanntmachung des Hinweises auf die Patenterteilung: **31.07.2002**
(21) Anmeldenummer: 98810281.0
(22) Anmeldetag: 01.04.1998
(51) Int. Cl.: B41F 13/008

(54) **Wischzylinderantrieb einer Stichtiefdruckmaschine**
Drive for a wiping cylinder in a die stamping press
Entrainement pour un cylindre d'essuyage d'une machine d'impression en creux

(30) Priorität: 29.05.1997 CH 126897
(43) Veröffentlichungstag der Anmeldung: 02.12.1998
(73) Patentinhaber: KBA-GIORI S.A., 1002 Lausanne (CH)
(72) Erfinder: Kuhn, Hermann Josef, 97225 Zellingen (DE); Schaede, Johannes, 97074 Würzburg (DE)
(74) Vertreter: Jörchel, Dietrich R.A.

(56) Entgegenhaltungen:
- GB-A- 1 160 538
- GB-A- 2 065 561

## Beschreibung

Die Erfindung bezieht sich auf einen Wischzylinderantrieb einer Stichtiefdruckmaschine mit einer den Wischzylinder in Drehung versetzenden Antriebswelle und einem diese Antriebswelle in Drehung versetzenden Antriebsorgan.

Derartige Wischzylinderantriebe sind bekannt und werden beispielsweise im US-Patent 3762319 beschrieben.

Wischzylinder dienen dazu, die Oberfläche der eingefärbten Druckplatten ausserhalb der Stichgruben vor dem eigentlichen Druckvorgang von Farbe zu säubern und gleichzeitig die Farbe in die Stichgruben einzudrücken. Zu diesem Zwecke liegt der Wischzylinder unter ziemlich starker Pressung am Plattenzylinder an und hat die gleiche Drehrichtung wie der Plattenzylinder, so dass also die Umfangsgeschwindigkeiten beider Zylinder an der Berührungslinie gegenläufig sind, um eine einwandfreie Wischung zu erzielen.

In Bogendruckmaschinen, bei denen der Plattenzylinder durch Zylindergruben getrennte Drucksättel aufweist, auf welche die Druckplatten aufgespannt sind, unterliegt der Wischzylinder jedesmal, wenn er auf einen Drucksattel aufläuft bzw. den Drucksattel verlässt, einem schlagartig ansteigenden bzw. abfallenden Drehmoment, welches abrupt von annähernd 0 Nm auf ungefähr 2500 Nm ansteigt und dann wieder auf 0 Nm abnimmt; diese schlagartige Aenderung des Lastdrehmoments erfolgt bei den aktuellen Geschwindigkeiten moderner Druckmaschinen 2,78 Mal/s. Abgesehen von der mechanischen Beanspruchung der Elemente des Wischzylinderantriebs wird dadurch auch ein erheblicher Geräuschpegel erzeugt. Bei bisher bekannten Wischzylinderantrieben sind keine Massnahmen vorgesehen, um die vorstehend erwähnten nachteiligen Effekte zu verringern.

Der Erfindung liegt die Aufgabe zugrunde, die Auswirkungen der schlagartigen Aenderungen des Lastdrehmoments des Wischzylinders auf den Wischzylinderantrieb und die kinematische Verbindung zum Antriebsmotor der Druckmaschine zu verringern.

Diese Aufgabe wird erfindungsgemäss dadurch gelöst, dass die Antriebswelle und das Antriebsorgan unter Zwischenschaltung elastisch verformbarer Dämpfungsmittel miteinander gekuppelt sind.

Diese Dämpfungsmittel bewirken bei einer schlagartigen Aenderung des Drehmoments ein Abfedern der Kräfte, welche auf das Antriebsorgan und die dieses mit dem Motor der Druckmaschine verbindenden kinematische Kette wirken, und gleichzeitig wird dadurch der Geräuschpegel gesenkt.

Ein Wischzylinder muss bei Unterbrechung des Druckbetriebs vom Plattenzylinder abrückbar sein, d.h. er muss radial verstellbar sein. Der Wischzylinderantrieb muss dieser Bedingung genügen und so aufgebaut sein, dass er eine radiale Verschiebung des Wischzylinders zulässt.

Um diese Forderung zu erfüllen, ist in einem bevorzugten Ausführungsbeispiel eine von der Wischzylinderwelle unabhängige Antriebswelle vorgesehen, welche mit Hilfe einer ausrückbaren Kupplung mit der Wischzylinderwelle gekuppelt und von dieser entkuppelt werden kann und welche an ihrem, dem Wischzylinder abgewandten Ende einseitig in einem Gelenklager gelagert ist, derart, dass sie um dieses Lager radial frei verschwenkbar ist und so im eingekuppelten Zustand der radialen Verstellbewegung der Wischzylinderwelle folgen kann.

Zweckmässige Ausgestaltungen der Erfindung ergeben sich aus den abhängigen Ansprüchen.

Die Erfindung wird anhand der Zeichnungen an zwei Ausführungsbeispielen näher erläutert. Es zeigen:
Figur 1 eine erste Ausführungsform eines Wischzylinderantriebs nach der Erfindung, im Schnitt, wobei die zum Wischzylinder gehörenden Teile nicht dargestellt sind,
Figur 2 die ineinandergreifenden Kupplungsteile von Antriebswelle und Wischzylinder in der Kupplungsstellung,
Figur 3 eine Ansicht der Kupplung in Richtung des Pfeils III in Figur 2,
Figur 4 die drei Teile der die Antriebswelle mit dem Antriebsorgan verbindenden Klauenkupplung, die in Figur 1 gezeigt ist, auseinandergezogen und in perspektivischer Darstellung,
Figur 5 ein zweites Ausführungsbeispiel eines Wischzylinderantriebs nach der Erfindung, ohne die zum Wischzylinder gehörenden Teile.

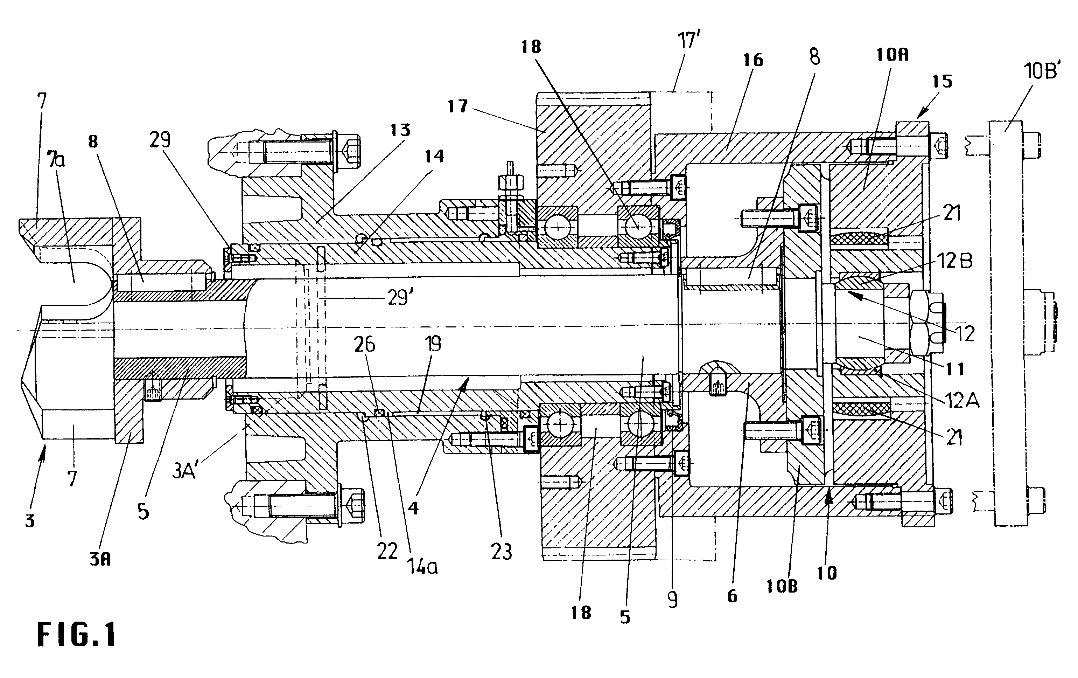

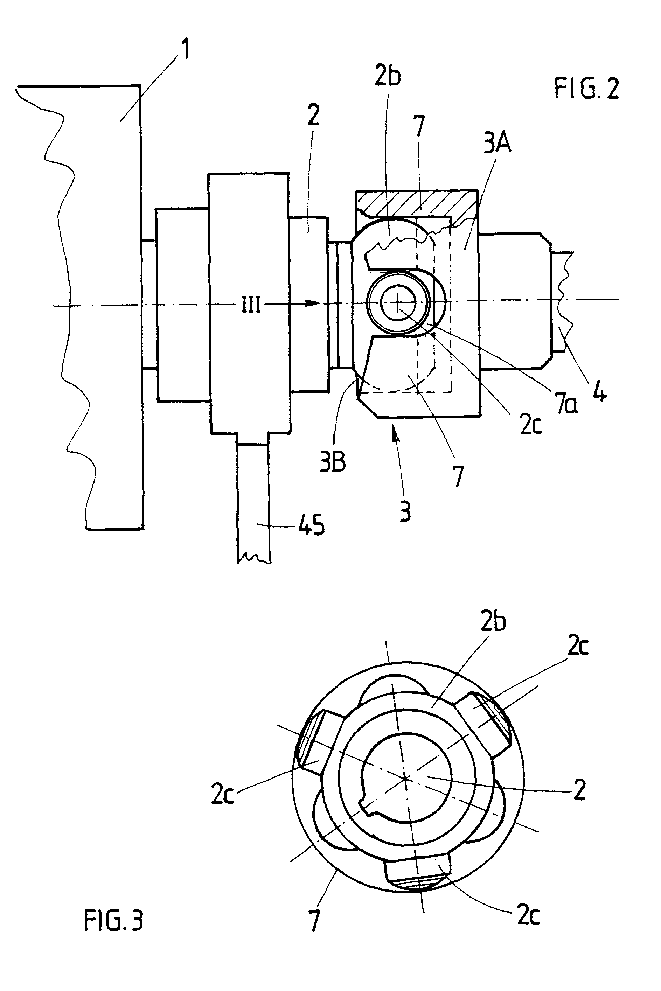

Im betrachteten Beispiel nach den Figuren 1 und 2 kann der nur teilweise in Figur 2 angedeutete Wischzylinder 1 einer nicht weiter dargestellten Stichtiefdruckmaschine mit Hilfe einer von der Wischzylinderwelle 2 getrennten Antriebswelle 4 durch axiale Verschiebung dieser Antriebswelle mit dem zum Hauptmotor der Druckmaschine führenden Getriebe gekuppelt oder von diesem entkuppelt werden. Die Wischzylinderwelle 2 ist in an sich bekannter Weise in den Wänden eines Wischkastens 45 gelagert.

Die Antriebswelle 4, die in Verlängerung der Wischzylinderwelle 2 liegt, wird ihrerseits durch ein Antriebsorgan 15 (Figur 1) in Drehung versetzt, welches ständig kinematisch mit dem Hauptmotor der Druckmaschine in Verbindung steht.

Diese Antriebswelle 4 besteht aus einem Schaft 5, der an seinem dem Wischzylinder 1 zugewandten Ende das Eingangsteil 3A einer ausrückbaren Kupplung 3 zur drehfesten Verbindung mit der Wischzylinderwelle 2 trägt, sowie aus einer am anderen Schaftende befestigten Nabe 6, an welcher das Ausgangsteil 10B einer Klauenkupplung 10 befestigt ist, mittels welcher die Antriebswelle 4 ständig mit dem Antriebsorgan 15 gekuppelt ist, wie später noch näher beschrieben wird. Zur drehfesten Verbindung des Kupplungsteils 3A mit dem Schaft 5 sowie des Kupplungsteils 10B mit der Nabe 6 der Antriebswelle 4 dienen Mitnehmerelemete 8.

Das Eingangsteil 3A der Kupplung 3 ist nach Art eines Klauenkupplungsteils mit axial vorstehenden Klauen 7 versehen, welche dazwischen liegende U-förmige Oeffnungen 7a begrenzen. Das am Ende der Wischzylinderwelle 2 befestigte Ausgangskupplungsteil 3B der Kupplung 3 besteht im betrachteten Beispiel, wie die Figuren 2 und 3 zeigen, aus einem kugelförmigen, also konvex ausgebildeten Wellenstumpf 2b sowie aus drei, an diesem drehbar gelagerten Führungsrollen 2c, welche sternförmig über den Umfang des Wellenstumpfs 2b verteilt sind und aus diesem radial herausragen. In der Kupplungsstellung der Kupplung 3, die in Figur 2 gezeigt ist, umgreifen die Klauen 7 des Kupplungsteils 3A der Antriebswelle 4 den kugelförmigen Wellenstumpf 2b der Wischzylinderwelle 2, und die Führungsrollen 2c greifen zur drehfesten Verbindung beider Kupplungsteile in die U-förmigen Oeffnungen 7a des Kupplungsteils 3A ein, wobei sie als Stützrollen fungieren. In Figur 1 ist mit ausgezogenen Linien die Kupplungsstellung der Antriebswelle 4 mit ihrem Kupplungsteil 3A dargestellt, wobei die zum Wischzylinder 1 gehörenden Teile nicht gezeigt sind, und in strichpunktierten Linien ist die nach Figur 1 nach rechts verschobene Entkupplungsstellung angedeutet, in welcher das Kupplungsteil 3A die Stellung 3A' einnimmt.

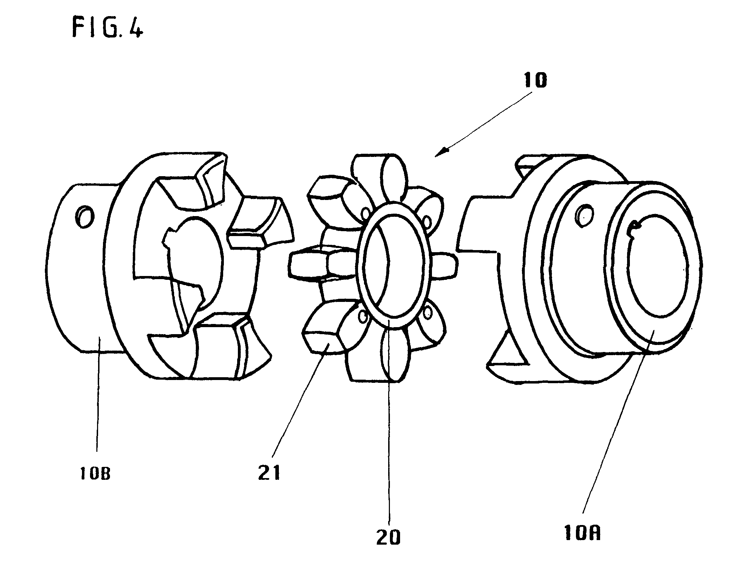

Das Ausgangsteil 10B der Kupplung 10 am rückwärtigen Ende der Antriebswelle 4 hat einen axial vorstehenden Zapfen 11, auf dem die konvexe Lagerfläche 12B eines Pendellagers oder Gelenklagers 12 angebracht ist. Dieses Ausgangsteil 10B greift, wie später noch an Hand der Figur 4 näher beschrieben, unter Zwischenschaltung elastisch verformbarer Mittel 20, 21 in das Eingangsteil 10A ein, das zum Antriebsorgan 15 gehört. Im Innern hat dieses Eingangsteil 10A eine konvexe Lagerfläche 12A, die zum erwähnten Pendellager 12 gehört und die sich auf der konvexen Lagerfläche 12B des Ausgangsteils 10B der Klauenkupplung 10 abstützt.

Der Schaft 5 der Antriebswelle 4 durchsetzt mit radialem Spiel eine in einer Buchse 13 des Maschinengestells axial verschiebbar gelagerte Hülse 14, auf welcher das Antriebsorgan 15 drehbar gelagert ist. Dieses Antriebsorgan 15 besteht aus dem bereits erwähnten Kupplungseingangsteil 10A, welches einen Mitnehmerflansch bildet, aus einer am radial vorstehenden Aussenrand dieses Mitnehmerflanschs befestigten Flanschbuchse 16, welche mit Spiel das Ausgangsteil 10B der Klauenkupplung 10 umgibt, und aus einem seitlich an dieser Flanschbuchse 16 befestigten Zahnrad 17, welches mittels Kugellager 18 drehbar auf der Hülse 14 gelagert ist. Dieses Zahnrad 17 befindet sich mit einem nicht dargestellten Antriebsritzel des zum Hauptmotor der Maschine führenden Getriebes in Eingriff. Das Antriebsorgan 15 ist ständig kinematisch mit dem Hauptmotor der Druckmaschine verbunden. Zwischen der Flanschbuchse 16 und dem hinteren Ende der Hülse 14 ist eine Dichtungsmanschette 9 eingesetzt, die verhindert, dass das Schmiermittel für die Kugellager 18 nach aussen gelangt.

Figur 4 zeigt die Teile der Klauenkupplung 10, und zwar in getrennter perspektivischer Darstellung das Eingangsteil 10A, das Ausgangsteil 10B und das zwischen beide Kupplungsteile eingefügte elastisch verformbare Dämpfungsmittel in Form eines Zahnrads 20, welches aus einem elastisch verformbaren Material besteht und dessen Zähne 21 jeweils zwischen zwei benachbarte Klauen der ständig im gekuppelten Zustand befindlichen Klauenkupplung 10 eingreifen. Die elastisch verformbaren Zähne 21 des Zahnrads 20 bilden also die Dämpfungsmittel und sind formschüssig zwischen die Flanken der Klauen beider Kupplungsteile eingelagert. Die dämpfende Wirkung wird durch die elastische Verformung der Zähne des Zahnrades bewirkt, und zwar jeweils bei schlagartig ansteigender und wieder abfallender bzw. bei wechselnder Belastung des Wischzylinderantriebs.

Auf diese Weise bewirken die Zähne 21 des Zahnrads 20 bei einer schlagartigen Aenderung des Lastdrehmoments des Wischzylinders und damit der Antriebswelle 4 eine Dämpfung der Kräfte, die auf das Antriebsorgan und die nachgeschalteten Teile der zum Hauptmotor führenden kinemanischen Kette wirken. Aufgrund der elastischen Verformbarkeit des Zahnrads kann sich nämlich die Antriebswelle 4 bei einer schlagartigen Aenderung des Drehmoments kurzzeitig etwas relativ zum Antriebsorgan 15 drehen, so dass die plötzliche Drehmomentänderung nicht auf das Antriebsorgan 15 übertragen wird. Gleichzeitig wird das Geräusch der Klauenkupplung, welches üblicherweise durch das Ineinandergreifen der Klauen beider Kupplungsteile erzeugt wird, wesentlich gedämpft.

Aufgrund der nur einseitigen Lagerung der Antriebswelle 4 mittels des Pendellagers 12 ist die Antriebswelle 4 innerhalb der Hülse 14 radial um dieses Lager in einem begrenzten Bereich frei verschwenkbar und kann daher im eingekuppelten Zustand der Lage des Wischzylinders bei dessen radialer Verstellung zwanglos folgen, da auch die vorderen Kupplungsteile 3A und 3B der Kupplung 3 wegen der Lagerung der Klauen 7 auf dem konvexen Wellenstumpf 2b des Wischzylinders etwas gegeneinander schwenkbar sind. Das durch das Pendellager 12 gebildete Gelenklager bildet ausserdem die Abstützung in axialer Richtung. Im entkuppelten Zustand stützt sich das vordere Ende .der Antriebswelle 4 auf dem an der Stirnseite der Hülse 14 angebrachten Stützring 29 ab.

Die aus Antriebswelle 4 mit den Kupplungsteilen 3A und 10B, dem Antriebsorgen 15 und der Hülse 14 bestehende Baugruppe ist mit Hilfe eines hydraulischen Stellantriebs axial verschiebbar, um die Antriebswelle 4 mit dem Ende der Wischzylinderwelle 2 zu kuppeln, bzw. sie von diesem Wischzylinderende zu entkuppeln, wie bereits an Hand der Figuren 1 bis 3 beschrieben. Zu diesem Zwecke ist zwischen dem Aussenumfang der Hülse 14 und der Gestellbuchse 13 ein Ringspalt 19 vorgesehen, der sich über einen bestimmten Teil ihrer Länge erstreckt und in welchen ein radialer Ringvorsprung 14a am Aussenumfang der Hülse 14 hineinragt. Dieser Ringvorsprung 14a ist mittels eines O-Rings 26 gegen den Innenumfang der Gestellbuchse 13 abgedichtet.

Die einander gegenüberliegenden Ringflansche an beiden Seiten des Ringvorsprungs 14a fungieren als Kolbenflächen. An beiden Enden des Ringspalts 19 sind in Figur 1 angedeutete Hydraulikanschlüsse 22 und 23 vorgesehen. Wenn ein hydraulisches Druckmittel über den Hydraulikanschluss 23 eingeführt wird, dann verschiebt sich die Hülse 14 zusammen mit der erwähnten, axial beweglichen Baugruppe in die in Figur 1 dargestellte Kupplungsstellung nach links, während gleichzeitig das auf der anderen Seite des Ringvorsprungs 14a befindliche Druckmittel durch den Anschluss 22 abfliessen kann. Wenn umgekehrt Druckmittel durch den Anschluss 22 eingeführt wird, dann wird die in Figur 1 linke Flanke des Ringvorsprungs 14a beaufschlagt und die Hülse 14 mit der gesamten erwähnten Baugruppe nach rechts in die Entkupplungsstellung verschoben.

In dieser Entkupplungsstellung, welche, wie bereits erwähnt, in Figur 1 strichpunktiert angedeutet ist, nehmen das Eingangsteil 3A der Kupplung 3, der Stützring 29, das Eingangsteil 10A der Klauenkupplung 10 sowie das Zahnrad 17 die Stellungen 3A', 29', 10B' bzw. 17' ein.

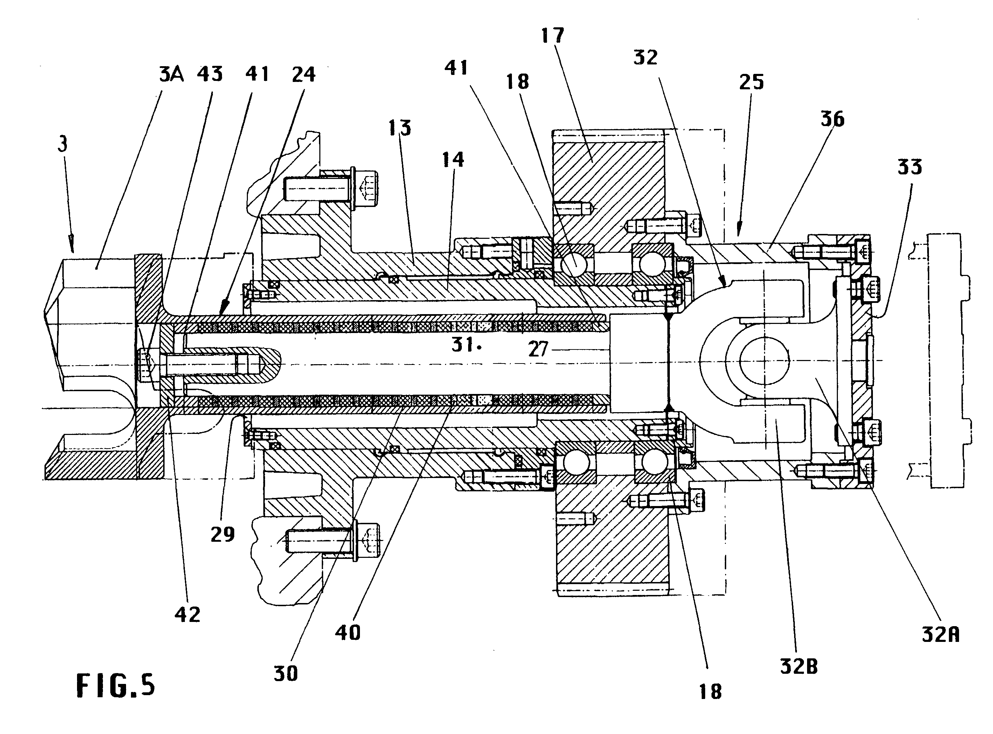

Figur 5 zeigt ein zweites Ausführungsbeispiel eines Wischzylinderantriebs, bei dem der nicht dargestellte Wischzylinder ebenfalls mittels einer von der Wischzylinderwelle unabhängigen Antriebswelle 24 in Drehung versetzt wird, die in Verlängerung der Wischzylinderwelle liegt und ihrerseits von einem Antriebsorgan 25 angetrieben wird, welches mit dem Hauptmotor der Druckmaschine in ständiger kinematischer Verbindung steht. Die Antriebswelle 24 hat die Form einer Hohlwelle und durchsetzt mit radialem Spiel wiederum eine in einer Buchse 13 des Maschinengestells axial verschiebbar gelagerte Hülse 14, mit welcher sie über das später noch beschriebene Antriebsorgan 25 verbunden ist.

An ihrem dem Wischzylinder zugewandten Ende trägt die Hohlwelle 24 wiederum das Eingangsteil 3A einer Kupplung 3, deren Ausgangsteil wie beim ersten Ausführungsbeispiel an der Wischzylinderwelle angebracht ist. Die Kupplung 3 mit ihren beiden Teilen ist genauso aufgebaut wie beim ersten Ausführungsbeispiel. In der in Figur 3 mit ausgezogenen Linien dargestellten Kupplungsstellung, in welcher die Antriebswelle 24 zusammen mit dem Antriebsorgan 25 und der Hülse 14 nach links verschoben ist, sind Antriebswelle 24 und Wischzylinderwelle gekuppelt, während in der in Figur 3 strichpunktiert dargestellten, nach rechts verschobenen Stellung der Antriebswelle 24 und der mit ihr verbundenen Teile der Wischzylinder entkuppelt ist.

Das Antriebsorgan 25 weist einen Schaft 31 auf, auf welchem eine grössere Zahl von Ringen aufgesetzt ist, und zwar handelt es sich dabei um abwechselnd angeordnete elastische Spannringe 30 und starre Stützringe 40. Diese Ringe 30, 40 werden durch zwei auf die beiden Enden des Schafts 31 aufgesetzte Druckringe 41 axial zusammengedrückt, und an dem dem Wischzylinder zugewandten Ende des Schafts 31 ist ausserdem eine Druckscheibe 42 vorgesehen, die mit einer Spannschraube 43 axial in die dem Wischzylinder abgewandte Richtung vorgespannt werden kann. Dieser Schaft 31 mitsamt den erwähnten Ringen ist ins Innere der Hohlwelle 24 eingesetzt und an seinem dem Wischzylinder abgewandten Ende mittels eines Kardangelenks 32, dessen Abtriebsteil 32B starr mit dem Schaft 31 verbunden ist, gelenkig gelagert.

Das Antriebsteil 32A dieses Kardangelenks 32 ist mit einer Stirnplatte 33 verbunden, an derem äusseren Rand eine Buchse 36 befestigt ist, welche das Kardangelenk mit Spiel umgibt. An dieser Buchse 36 ist seitlich ein Zahnrad 17 befestigt, welches mit Hilfe der Kugellager 18 drehbar auf der Hülse 14 gelagert ist. Dieses Zahnrad 17 befindet sich, wie beim ersten Ausführungsbeispiel, mit einem Antriebsritzel in Eingriff, welches zu dem zum Hauptmotor der Druckmaschine führenden Getriebe gehört.

Das gesamte Antriebsorgan 25, welches also, wie erwähnt, aus dem Schaft 31 mit seinen aufgesetzten Ringen, dem Kardangelenk 32, der Buchse 36 und dem Zahnrad 17 besteht, befindet sich in ständiger kinematischer Verbindung mit dem Hauptmotor der Druckmaschine.

Die zum Kuppeln mit dem Wischzylinder axial bewegliche Baugruppe umfasst also die Hohlwelle 24 mit dem Kupplungsteil 3A, das vorstehend beschriebene Antriebsorgan 25 sowie die Hülse 14 und ist hydraulisch in der gleichen Weise verstellbar, wie beim ersten Beispiel beschrieben.

Die auf dem Schaft 31 sitzenden elastischen Spannringe 30 sind durch entsprechendes Anziehen der Spannschraube 43 axial vorgespannt, wobei sich der in Figur 5 am rechten Schaftende sitzende Druckring 41 gegen die innere Stirnfläche 27 des Kardangelenks 32 abstützt. Die Vorspannung ist so gewählt, dass die elastischen Spannringe 30 zwischen den Stützringen 40 hinreichen derart radial verformt werden, dass bei Abwesenheit schlagartiger Drehmomentänderungen die mit der Wischzylinderwelle gekuppelte Hohlwelle 24 durch Reibung vom rotierenden Schaft 31, wie bei einer Reibkupplung, mitgenommen wird, bei plötzlichen Drehmomentänderungen dagegen, zur Verhinderung einer Ueberlastung der Antriebselemente, auf den Ringen 30 und damit relativ zum Schaft 31 rutschen kann, wie bei einer Rutschkupplung. Normalerweise erfolgt also die Mitnahme der Hohlwelle 24 durch Reibschluss mit dem Schaft 31, während bei schlagartiger Aenderung des Lastdrehmoments der erwähnte Rutscheffekt für eine entsprechende Dämpfung sorgt und gleichzeitig den Geräuschpegel reduziert.

Wie auch beim ersten Ausführungsbeispiel, bei welchem die Kraftübertragung unter Zwischenschaltung eines elastisch verformbaren Zahnrades durch Formschluss erfolgt, haben die beschriebenen Antriebe den zusätzlichen Vorteil, dass die die Dämpfung bewirkenden Verschleisselemente, also das Zahnrad 20 beim ersten Ausführungsbeispiel sowie die elastischen Spannringe 30 beim zweiten Ausführungsbeispiel, relativ kostengünstig und einfach, bei kleinstmöglichem Arbeitsaufwand, ausgetauscht werden können.

Aufgrund der einseitigen Lagerung des aus Schaft 31 mit seinen Ringen und Hohlwelle 24 bestehenden Bauteils mittels des Kardangelenks 32 ist dieses Bauteil um das Gelenk herum radial in einem begrenzten Bereich frei verschwenkbar und kann daher im eingekuppelten Zustand dem Wischzylinder bei einer radialen Verstellung zwanglos folgen. In entkuppelter Stellung stützt sich die Hohlwelle 24 wiederum auf einem an der vorderen Stirnseite der Hülse 14 befestigten Stützring 29 ab.

Die Erfindung ist nicht auf die beschriebenen Ausführungsbeispiele beschränkt, sondern lässt hinsichtlich der Ausbildung der Antriebswelle und des Antriebsorgans sowie der Dämpfungsmittel mannigfache Varianten zu.

## Patentansprüche

1. Wischzylinderantrieb einer Stichtiefdruckmaschine, mit einer den Wischzylinder (2) in Drehung versetzenden Antriebswelle (4; 24) und einem diese Antriebswelle in Drehung versetzenden Antriebsorgan (15; 25), **dadurch gekennzeichnet, dass** die Antriebswelle (4; 24) und das Antriebsorgan (15; 25) zwecks Dämpfung schlagartiger Lastdrehmomentänderungen unter Zwischenschaltung elastisch verformbarer Mittel (20, 21; 30) miteinander gekuppelt sind.

2. Wischzylinderantrieb nach Anspruch 1, **dadurch gekennzeichnet, dass** eine von der Wischzylinderwelle (2) unabhängige Antriebswelle (4; 24) vorgesehen ist, welche mittels einer ausrückbaren Kupplung (3) mit der Wischzylinderwelle (2) kuppelbar bzw. von dieser entkuppelbar ist.

3. Wischzylinderantrieb nach Anspruch 2, **dadurch gekennzeichnet, dass** die Antriebswelle (4; 24) an ihrem dem Wischzylinder (1) abgewandten Ende einseitig gelenkig gelagert ist, derart, dass sie um dieses Lager radial in einem begrenzten Bereich frei verschwenkbar ist und im eingekuppelten Zustand einer radialen Verstellbewegung des Wischzylinders folgen kann.

4. Wischzylinderantrieb nach einem der Ansprüche 1 bis 3, **dadurch gekennzeichnet, dass** die Antriebswelle (4) und das Antriebsorgan (15) mit Hilfe einer Klauenkupplung (10) unter Zwischenschaltung eines Zahnrads (20) aus elastisch verformbarem Material miteinander gekuppelt sind, wobei die elastisch verformbaren Zähne (21) des Zahnrades jeweils zwischen zwei benachbarte Klauen der Klauenkupplung (10) eingreifen.

5. Wischzylinderantrieb nach Anspruch 4, **dadurch gekennzeichnet, dass** die beiden Kupplungsteile (10A, 10B) der erwähnten Klauenkupplung (10) mit Hilfe eines Pendellagers (12) relativ zueinander gelagert sind, derart, dass die am Abtriebsteil (10B) der Kupplung befestigte Antriebswelle (4) in einem begrenzten Bereich frei radial verschwenkbar ist.

6. Wischzylinderantrieb nach einem der Ansprüche 1 bis 3, **dadurch gekennzeichnet, dass** die Antriebswelle (24) eine Hohlwelle ist und das Antriebsorgan (25) einen in diese Hohlwelle eingreifenden Schaft (31) aufweist, und dass zwischen dem Aussenumfang des Schafts (31) und dem Innenumfang der Hohlwelle (24) elastisch verformbare Mittel (30) als Dämpfungselemente eingesetzt sind.

7. Wischzylinderantrieb nach Anspruch 6, **dadurch gekennzeichnet, dass** auf dem Schaft (31) des Antriebsorgans (25) eine Vielzahl von Ringen, und zwar abwechselnd elastische Spannringe (30) und starre Stützringe (40), aufgesetzt und axial vorgespannt sind, derart, dass bei Abwesenheit von schlagartigen Drehmomentänderungen die Hohlwelle (24) vom rotierenden Schaft (31) durch Reibschluss mitgenommen wird, dagegen bei schlagartigen Drehmomentänderungen auf den elastischen Spannringen (30) rutschen kann.

8. Wischzylinderantrieb nach Anspruch 6 oder 7, **dadurch gekennzeichnet, dass** der Schaft (31) an seinem dem Wischzylinder abgewandten Ende mittels eines zum Antriebsorgan (25) gehörenden Kardangelenks (32) gelagert ist, derart, dass das aus Schaft (31) und Hohlwelle (24) bestehende Bauteil um das Gelenk in einem begrenzten Bereich frei radial verschwenkbar ist.

9. Wischzylinderantrieb nach einem der Ansprüche 2 bis 8, **dadurch gekennzeichnet, dass** das Antriebsorgan (15; 25) an seinem kinematisch dem Wischzylinder abgewandten Ende ein Zahnrad (17) trägt, welches mittels eines Kugellagers (18) auf einer die Antriebswelle (4; 24) mit radialem Spiel umgebenden, axial verschiebbar im Maschinengestell montierten Hülse (14) gelagert und vorzugsweise an einer Buchse (16; 36) befestigt ist, welche das dem Wischzlinder abgewandte Ende der Antriebswelle mit Spiel umgibt.

10. Wischzylinderantrieb nach einem der Ansprüche 2 bis 9, **dadurch gekennzeichnet, dass** die aus der Antriebswelle (4; 24) mit dem Eingangsteil (3A) der ausrückbaren Kupplung (3), aus dem Antriebsorgan (15, 25) und aus der Hülse (14) bestehende Baugruppe im Maschinengestell zwecks Kupplung mit dem Wischzylinder axial verschiebbar ist.

## Claims

1. A wiping cylinder drive of an intaglio printing machine, with a drive shaft (4; 24) setting the wiping cylinder (2) in rotation and with a drive member (15; 25) setting this drive shaft in rotation, **characterised in that**, for the purpose of damping sudden changes in load torque, the drive shaft (4; 24) and the drive member (15; 25) are coupled to one another, with elastically deformable means (20, 21; 30) being interposed.

2. The wiping cylinder drive as claimed in claim 1, **characterised in that** a drive shaft (4; 24) is provided which is independent of the wiping cylinder shaft (2) and which can be coupled to or uncoupled from the wiping cylinder shaft (2) by means of a disengageable coupling (3).

3. The wiping cylinder drive as claimed in claim 2, **characterised in that** the drive shaft (4; 24), at its end facing away from the wiping cylinder (1), is mounted in an articulated manner on one side, in such a way that it is freely pivotable radially about this bearing within a limited range and, when in the coupled state, can follow a radial adjusting movement of the wiping cylinder.

4. The wiping cylinder drive as claimed in one of claims 1 to 3, **characterised in that** the drive shaft (4) and the drive member (15) are coupled to one another with the aid of a claw coupling (10), with a gearwheel (20) made of elastically deformable material being interposed, the elastically deformable teeth (21) of the gearwheel in each case engaging between two adjacent claws of the claw coupling (10).

5. The wiping cylinder drive as claimed in claim 4, **characterised in that** the two coupling parts (10A, 10B) of said claw coupling (10) are mounted relative to one another with the aid of a pendulum bearing (12), in such a way that the drive shaft (4) fastened to the drive part (10B) of the coupling is freely pivotable radially within a limited range.

6. The wiping cylinder drive as claimed in one of claims 1 to 3, **characterised in that** the drive shaft (24) is a hollow shaft and the drive member (25) has a shank (31) engaging into this hollow shaft, and **in that** elastically deformable means (30) are inserted as damping elements between the outer circumference of the shank (31) and the inner circumference of the hollow shaft (24).

7. The wiping cylinder drive as claimed in claim 6, **characterised in that** a multiplicity of rings, specifically alternately elastic tension rings (30) and rigid supporting rings (40), are slipped on the shank (31) of the drive member (25) and axially prestressed, in such a way that, in the absence of sudden changes in torque, the hollow shaft (24) is taken up by the rotating shank (31) due to frictional connection, whereas, in the case of sudden changes in torque, said hollow shaft can slide on the elastic tension rings (30).

8. The wiping cylinder drive as claimed in claim 6 or 7, **characterised in that** the shank (31) is mounted, at its end facing away from the wiping cylinder, by means of a Cardan joint (32) belonging to the drive member (25), in such a way that the component consisting of the shank (31) and of the hollow shaft (24) is freely pivotable radially about the joint within a limited range.

9. The wiping cylinder drive as claimed in one of claims 2 to 8, **characterised in that** the drive member (15; 25), at its end facing kinematically away from the wiping cylinder, carries a gearwheel (17) which is mounted by means of a ball bearing (18) on a sleeve (14) surrounding the drive shaft (4; 24) with radial play and mounted axially displaceably in the machine stand and which is preferably fastened to a bush (16; 36) which surrounds with play that end of the drive shaft which faces away from the wiping cylinder.

10. The wiping cylinder drive as claimed in one of claims 2 to 9, **characterised in that** the subassembly comprising the drive shaft (4; 24) together with the input part (3A) of the disengageable coupling (3), the drive member (15, 25) and the sleeve (14) can be displaced axially in the machine stand for the purpose of coupling to the wiping cylinder.

## Revendications

1. Entraînement pour cylindre d'essuyage d'une machine d'impression taille-douce, avec un arbre d'entraînement (4; 24) entraînant en rotation le cylindre d'essuyage (2) et un organe d'entraînement (15; 25) entraînant en rotation ledit arbre d'entraînement, **caractérisé en ce que** l'arbre d'entraînement (4; 24) et l'organe d'entraînement (15; 25) sont couplés entre aux par l'intermédiaire de moyens (20, 21; 30) déformables élastiques pour amortir de brusques changements du couple de charge.

2. Entraînement pour cylindre d'essuyage selon la revendication 1, **caractérisé en ce qu'**un arbre d'entraînement (4; 24) indépendant de l'arbre du cylindre d'essuyage (2) est prévu, lequel au moyen d'un accouplement (3) débrayable peut être couplé à l'arbre du cylindre d'essuyage (2) ou découplé de celui-ci.

3. Entraînement pour cylindre d'essuyage selon la revendication 2, **caractérisé en ce que** l'arbre d'entraînement (4; 24) à son extrémité opposée au cylindre d'essuyage (1) est logé d'un côté de façon articulée, de telle sorte qu'il peut pivoter radialement de façon libre dans un domaine limité autour dudit palier et en état couplé peut suivre un mouvement de réglage radial du cylindre d'essuyage.

4. Entraînement pour cylindre d'essuyage selon l'une des revendications 1 à 3, **caractérisé en ce que** l'arbre d'entraînement (4) et l'organe d'entraînement (15) sont couplés entre eux à l'aide d'un accouplement à griffes (10) par l'intermédiaire d'une roue dentée (20) en matière élastique déformable, les dents (21) élastiques déformables de la roue dentée s'engageant chaque fois entre deux griffes voisines de l'accouplement à griffes (10).

5. Entraînement pour cylindre d'essuyage selon la revendication 4, **caractérisé en ce que** les deux parties de l'accouplement (10A, 10B) dudit accouplement à griffes (10) sont montées relativement l'une par rapport à l'autre par un palier articulé (12) de telle sorte que l'arbre d'entraînement (4) attaché à la partie entraînée (10B) de l'accouplement peut pivoter radialement de façon libre dans un domaine limité.

6. Entraînement pour cylindre d'essuyage selon l'une des revendications 1 à 3, **caractérisé en ce que** l'arbre d'entraînement (24) est un arbre creux et l'organe d'entraînement (25) comprend une tige (31) s'engageant dans cet arbre creux et **en ce qu'**entre la circonférence extérieure de la tige (31) et la circonférence intérieure de l'arbre creux (24) des moyens (30) élastiques déformables sont placés comme éléments d'amortissement.

7. Entraînement pour cylindre d'essuyage selon la revendication 6, **caractérisé en ce que** sur la tige (31) de l'organe d'entraînement (25) une pluralité d'anneaux, en particulier alternativement des anneaux de tension élastiques (30) et des anneaux rigides de support (40), sont montés sous précontrainte axiale de telle sorte qu'en l'absence de brusques changements de couple l'arbre creux (24) est entraîné par friction par la tige (31) en rotation, tandis que lors de changements brusques de couple il peut glisser sur les anneaux de tension élastiques (30).

8. Entraînement pour cylindre d'essuyage selon la revendication 6 ou 7, **caractérisé en ce que** la tige (31), à son extrémité opposée au cylindre d'essuyage, est montée sur un joint à cardan (32) appartenant à l'organe d'entraînement (25) de telle sorte que la pièce formée de la tige (31) et de l'arbre creux (24) peut pivoter radialement de façon libre dans un domaine limité.

9. Entraînement pour cylindre d'essuyage selon l'une des revendications 2 à 8, **caractérisé en ce que** l'organe d'entraînement (15; 25) porte une roue dentée (17) à son extrémité éloignée cinématiquement du cylindre d'essuyage, laquelle au moyen d'un roulement à billes (18) est montée sur un manchon (14) entourant avec jeu radial l'arbre d'entraînement (4, 24) et déplaçable axialement dans le bâti de la machine et attachée de préférence à une douille (16; 36), laquelle entoure avec jeu l'extrémité de l'arbre d'entraînement opposée au cylindre d'essuyage.

10. Entraînement pour cylindre d'essuyage selon l'une des revendications 2 à 9, **caractérisé en ce que** le sous-groupe comprenant l'arbre d'entraînement (4; 24) avec la partie d'entrée (3A) de l'accouplement (3) débrayable, l'organe d'entraînement (15, 25) et le manchon (14) est déplaçable axialement dans le bâti de la machine en vue de son couplage avec le cylindre d'essuyage.
